# EUROPEAN PATENT APPLICATION

(11) **EP 4 310 953 A1**
(43) Date of publication of application: **24.01.2024**
(21) Application number: 22804035.8
(22) Date of filing: 19.05.2022
(51) Int. Cl.: H01M 4/505, H01M 4/525

(54) **IRON-MANGANESE-BASED POSITIVE ELECTRODE MATERIAL, AND PREPARATION METHOD THEREFOR AND USE THEREOF**

(30) Priority: 19.05.2021 CN 202110548471
(71) Applicant: SVOLT ENERGY TECHNOLOGY CO., LTD, Changzhou, Jiangsu 213200 (CN)
(72) Inventor: CHEN, Sixian, hangzhou, Jiangsu 213200 (CN); JIANG, Weijun, hangzhou, Jiangsu 213200 (CN); XU, Xinpei, hangzhou, Jiangsu 213200 (CN); ZHENG, Xiaoxing, hangzhou, Jiangsu 213200 (CN)
(74) Representative: Groth & Co. KB
(86) International application number: PCT/CN2022/093829
(87) International publication number: WO 2022/242715

(57) **Abstract**

The present application provides an iron-manganese-based positive electrode material, and a preparation method therefor and the use thereof. The iron-manganese-based positive electrode material is LiₐFeₓMn_{y}O₂, wherein a=0.1-0.5, 0<x<1.0, 0<y<1.0, and x+y=1; the valence state of at least some of the manganese elements in the iron-manganese-based positive electrode material is positive tetravalence; and the maximum intensity of the characteristic peak of the Li₂MnO₃ crystal phase in the XRD spectrum of the iron-manganese-based positive electrode material is less than one third of the maximum characteristic peak intensity of the iron-manganese-based positive electrode material, or there is no characteristic peak of the Li₂MnO₃ crystal phase. In the present application, the initial efficiency and the cycling performance are further better improved by controlling the components and crystal structure of the iron-manganese-based positive electrode material.

## Description

### CROSS REFERENCE TO RELATED APPLICATIONS

The present application is based on and claims priority to Chinese patent application No. 202110548471.6, filed on May 19, 2021, the entire content of which is incorporated herein.

### TECHNICAL FIELD

The present application relates to the technical field of lithium ion batteries, in particular to an iron-manganese-based positive electrode material, and a preparation method therefor and use thereof.

### BACKGROUND

With the increasingly prominent issues of energy crisis and environmental pollution, the development and utilization of new energy is imperative. In the coming years, the use demand of lithium ion batteries in the new energy vehicle industry will continue to increase.

In new energy vehicles, the lithium ion batteries occupy the core position, and in the lithium ion batteries, positive electrode materials are of utmost importance. Taking an NCM523 power battery as an example, the proportion of the positive electrode material to the cost is as high as 32%, and a total proportion of an electrolyte, a diaphragm and a negative electrode is only about 25%. In addition to a cost factor, the electrochemical performance of the positive electrode materials is also closely related to the overall performance of the battery. Therefore, the positive electrode material of the lithium ion battery is of utmost importance for the entire battery.

Cobalt is a scarce resource, mainly concentrated in Africa, and its price is about four times that of nickel. Therefore, developing cobalt-free and resource-rich nickel manganese materials is in line with the development trend. According to the prediction of enquiry agencies, the explosive growth of the lithium ion batteries in the future will inevitably lead to a greater demand for cobalt resources than supply, and there will be unstable fluctuations in price. Therefore, considering the long-term development of electric vehicles, breaking away from the dependence on rare metals and reducing costs are a necessary path for healthy development of the new energy vehicle industry. At present, the positive electrode material is still mainly ternary, which is inevitably affected by the price of precious metals, especially precious metal elements such as nickel and cobalt, which are important factors affecting the cost of the positive electrode material.

At present, many companies are advocating for low cobalt or even cobalt removal, but they are still using transition metal elements such as nickel with higher prices. Cost control of the positive electrode material is a temporary solution rather than a fundamental solution. Considering the long-term development of the electric vehicles, breaking away from the dependence on the rare metals and reducing the costs are the necessary path for healthy development of the new energy vehicle industry.

For an iron-manganese-based positive electrode material, a current preparation method is usually relatively complex, and a three-step method of co-precipitation, solvothermal and a solid phase sintering reaction is usually used. The preparation process is complex, the preparation cycle is long, the preparation cost is high, and it is not suitable for large-scale production. Moreover, due to the presence of the solvothermal process, the crystallinity and morphology of materials are usually poor. In addition, due to high content of Li in an existing iron-manganese-based positive electrode material (a:(x+y)≥1 in a LiₐFeₓMn_{y}O₂ material), the material may contain a Li₂MnO₃ impurity phase. The Li₂MnO₃ phase is unstable and prone to being decomposed during charging and discharging, oxygen may be released, and a concentration of cations is increased, resulting in high charging capacity and low discharging capacity, which causes a problem of low initial efficiency, and the cycling stability is also relatively poor.

### SUMMARY OF THE INVENTION

A main objective of the present application is to provide an iron-manganese-based positive electrode material, and a preparation method therefor and use thereof, so as to solve a problem of poor initial efficiency of an iron-manganese-based positive electrode material in the prior art.

In order to achieve the above objective, an aspect of the present application provides an iron-manganese-based positive electrode material. The iron-manganese-based positive electrode material is LiₐFeₓMn_{y}O₂, wherein a=0.1-0.5, 0<x<1.0, 0<y<1.0, and x+y=1; a valence state of at least some of manganese elements in the iron-manganese-based positive electrode material is positive tetravalence; and a maximum intensity of a characteristic peak of a Li₂MnO₃ crystal phase in an XRD spectrum of the iron-manganese-based positive electrode material is less than one third of a maximum characteristic peak intensity of the iron-manganese-based positive electrode material, or no characteristic peak of the Li₂MnO₃ crystal phase appears, and the Li₂MnO₃ crystal phase has the characteristic peak in a range from 20° to 25°, a range from 31° to 33°, a range from 43° to 45° and a range from 53° to 55°.

Further, a particle size of the above iron-manganese-based positive electrode material is in a range from 140 nm to 1,000nm, preferably 140 nm to 500 nm.

Further, a content of residual alkali in the above iron-manganese-based positive electrode material is in a range from 1,400 ppm to 1,900 ppm.

Further, a characteristic peak intensity of the Li₂MnO₃ crystal phase in the XRD spectrum of the above iron-manganese-based positive electrode material in the range from 31° to 33° and/or 43° to 45° is less than one third of the maximum characteristic peak intensity of the iron-manganese-based positive electrode material.

Another aspect of the present application further provides a method for preparing an iron-manganese-based positive electrode material, including: obtaining the iron-manganese-based positive electrode material by performing oxidation-sintering on a lithium inorganic compound and a FeₓMn_{y}(OH)₂ precursor, wherein 0<x<1.0, 0<y<1.0, and x+y=1; and a ratio of a molar weight of Li in the lithium inorganic compound to a total molar weight of Fe and Mn in the FeₓMn_{y}(OH)₂ precursor is in a range from 0.1: 1 to 0.5:1.

Further, oxidation-sintering above is performed in an oxygen-containing gas, an oxygen content in the oxygen-containing gas is in a range from 20% to 100% preferably, and a flow rate of the oxygen-containing gas is in a range from 2L/min to 5L/min preferably.

Further, the above preparation method includes: obtaining an iron-manganese-based positive electrode material precursor by performing a first-stage oxidation-sintering on the lithium inorganic compound and the FeₓMn_{y}(OH)₂ precursor; and obtaining the iron-manganese-based positive electrode material by performing a second-stage oxidation-sintering on the iron-manganese-based positive electrode material precursor; wherein preferably, the first-stage oxidation-sintering is performed at a temperature ranging from 600°C to 800°C, and kept at the temperature for a time ranging from 6h to 12h, and the second-stage oxidation-sintering is performed at a temperature ranging from 300°C to 500°C, and kept at the temperature for a time ranging from 2h to 6h.

Further, a temperature is raised at a rate ranging from 2°C/min to 5°C/min before the oxidation-sintering above, a temperature is decreased at a rate ranging from 2°C/min to 4°C/min between the first-stage oxidation-sintering and the second-stage oxidation-sintering, and a temperature is decreased at a rate ranging from 2°C/min to 4°C/min after the second-stage oxidation-sintering.

Further, the above preparation method further includes a process for preparing the FeₓMn_{y}(OH)₂ precursor, wherein the process for preparing the FeₓMn_{y}(OH)₂ precursor includes: obtaining the FeₓMn_{y}(OH)₂ precursor by making a first material system including ferrous salt and divalent manganese salt undergo a co-precipitation reaction under an alkaline condition; wherein the ferrous salt is selected from one or more of ferrous chloride, ferrous nitrate, and ferrous oxalate preferably, the divalent manganese salt is selected from one or more of manganese chloride, manganese nitrate, and manganese acetate preferably, and preferably in the first material system, a molar ratio of Mn²⁺ to Fe²⁺ is in a range from 10:1 to 1:1; a pH value of the first material system is equal to 12 to 13 preferably, the pH value of the first material system is adjusted using an alkaline reagent preferably, and the alkaline reagent is selected from one or more of sodium hydroxide and sodium carbonate; and the co-precipitation reaction is performed at a temperature ranging from 40°C to 60°C preferably, the co-precipitation reaction is performed in an atmosphere of nitrogen or a second inert gas preferably, the second inert gas is selected from one of argon, helium and hydrogen, a stirring is performed during the process of the co-precipitation reaction preferably, and a rate for stirring is in a range from 200rpm to 400rpm preferably.

Further, the first material system above further includes a complexing agent and a solvent, and the process for preparing the FeₓMn_{y}(OH)₂ precursor includes: step S1, obtaining the first material system by mixing the ferrous salt, the divalent manganese salt, the complexing agent and the solvent, wherein the complexing agent is selected from one or more of ammonium hydroxide, ammonium sulfate and ethylene diamine tetraacetic acid preferably, and preferably in the first material system, a content of the complexing agent is in a range from 28g/L to 53g/L; and step 2, mixing the first material system with the alkaline reagent for a co-precipitation reaction after heating the first material system to the temperature of the co-precipitation reaction in the atmosphere of nitrogen or the second inert gas and under the conditions for stirring, and obtaining the FeₓMn_{y}(OH)₂ precursor after aging.

Yet another aspect of the present application provides a lithium ion battery, including an electrolyte, a positive electrode material and a negative electrode material, wherein the positive electrode material includes an iron-manganese-based positive electrode material, and the iron-manganese-based positive electrode material is any above iron-manganese-based positive electrode material or an iron-manganese-based positive electrode material prepared by any above preparation method.

By applying the technical solution of the present application, the lithium content in the iron-manganese-based positive electrode material is low, and the valence state and crystal form of manganese are well controlled. On the one hand, some manganese in the material is positive tetravalent manganese, and on the other hand, in the XRD spectrum of the iron-manganese-based positive electrode material prepared by the embodiment of the present application, the maximum intensity of the characteristic peak (namely the characteristic peak in the range from 20° to 25°, the range from 31° to 33°, the range from 43° to 45° and the range from 53° to 55°) corresponding to the Li₂MnO₃ crystal phase is less than one third of the maximum characteristic peak intensity of the iron-manganese-based positive electrode material, or there is no characteristic peak in the Li₂MnO₃ crystal phase. Therefore, there is only very little or no Li₂MnO₃ phase in the positive electrode material of the present application, and thus there is no problem of oxygen release and increased cation concentration caused by a situation that the Li₂MnO₃ phase is prone to being decomposed during charging and discharging. Under the synergistic effect of the above structure and composition characteristics, the electrical performance of the iron-manganese-based positive electrode material is effectively improved, so that initial efficiency and cycling performance are well improved.

### BRIEF DESCRIPTION OF THE DRAWINGS

Accompanying drawings of the description, which constitute a part of the present application, are used to provide a further understanding of the present application, the schematic embodiments and their descriptions of the present application are used to explain the present application, and do not constitute an improper limitation to the present application. In the figures:
FIG. 1 shows an XRD spectrum of an iron-manganese-based positive electrode material prepared in Embodiment 1 of the present application.
FIG. 2 shows an XRD spectrum of an iron-manganese-based positive electrode material prepared in Embodiment 2 of the present application.
FIG. 3 shows an XRD spectrum of an iron-manganese-based positive electrode material prepared in Comparative Example 1 of the present application.
FIG. 4 shows an XPS spectrum of an iron-manganese-based positive electrode material prepared in Embodiment 1 of the present application.

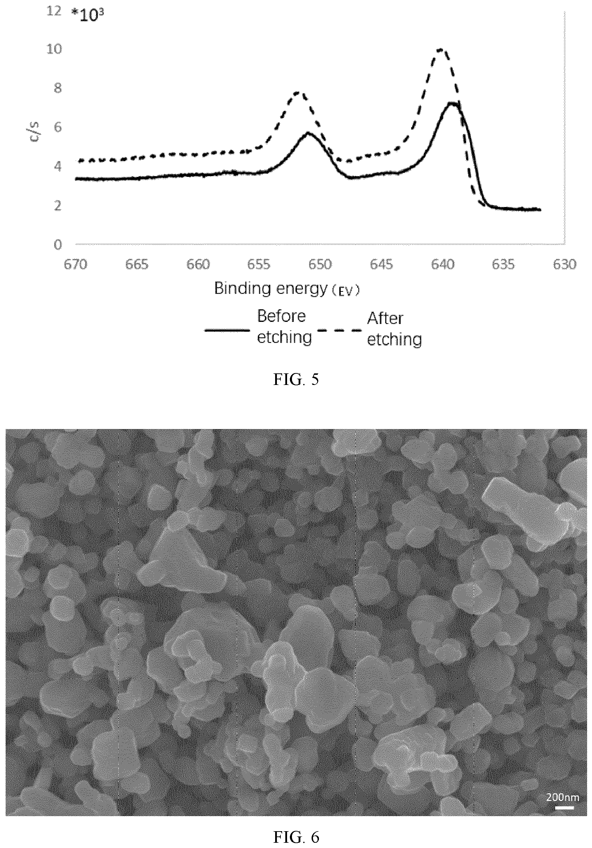

FIG. 5 shows an XPS spectrum of an iron-manganese-based positive electrode material prepared in Embodiment 2 of the present application.
FIG. 6 shows a scanning electron microscope diagram of an iron-manganese-based positive electrode material prepared in Embodiment 1 of the present application.

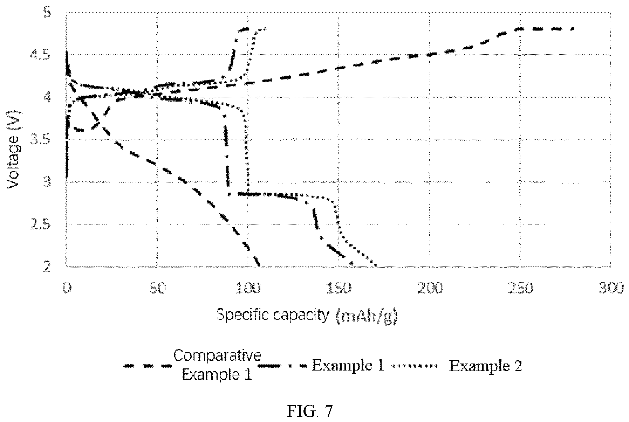

FIG. 7 shows a charging and discharging curve diagram of an iron-manganese-based positive electrode material prepared in Embodiments 1 and 2 and Comparative Example 1 of the present application.

### DETAILED DESCRIPTION

It should be noted that the embodiments in the present application and features in the embodiments may be combined with each other in the case of not conflict. The present application will be described in detail below with reference to the accompanying drawings and in combination with the embodiments.

As described in the background of the present application, due to high content of Li in an existing iron-manganese-based positive electrode material (a:(x+y)≥1 in a LiₐFeₓMn_{y}O₂ material), the material may contain a Li₂MnO₃ impurity phase, resulting in low initial efficiency and poor cycling stability of the lithium-rich iron-manganese-based positive electrode material. In order to solve the above problems, the present application provides an iron-manganese-based positive electrode material, and a preparation method therefor and use thereof.

According to a typical implementation of the present application, an iron-manganese-based positive electrode material is provided. The iron-manganese-based positive electrode material is LiₐFeₓMn_{y}O₂, wherein a=0.1-0.5, 0<x<1.0, 0<y<1.0, and x+y=1; a valence state of at least some of manganese elements in the iron-manganese-based positive electrode material is positive tetravalence; and a maximum intensity of a characteristic peak of a Li₂MnO₃ crystal phase in an XRD spectrum of the iron-manganese-based positive electrode material is less than one third of a maximum characteristic peak intensity of the iron-manganese-based positive electrode material, or no characteristic peak of the Li₂MnO₃ crystal phase appears, and the Li₂MnO₃ crystal phase has the characteristic peak in a range from 20° to 25°, a range from 31° to 33°, a range from 43° to 45° and a range from 53° to 55°.

In the iron-manganese-based positive electrode material of the present application, the content of lithium is low, and the valence state and crystal form of manganese are well controlled. On the one hand, some manganese in the material is positive tetravalent manganese, and on the other hand, in an XRD spectrum of the iron-manganese-based positive electrode material prepared by the embodiment of the present application, the maximum intensity of the characteristic peak (namely the characteristic peak in the range from 20° to 25°, the range from 31° to 33°, the range from 43° to 45° and the range from 53° to 55°) corresponding to the Li₂MnO₃ crystal phase is less than one third of the maximum characteristic peak intensity of the iron-manganese-based positive electrode material, or no characteristic peak of the Li₂MnO₃ crystal phase appears. Therefore, there is only very little or no Li₂MnO₃ phase in the positive electrode material of the present application, and thus there is no problem of oxygen release and increased cation concentration caused by a situation that the Li₂MnO₃ phase is prone to being decomposed during charging and discharging. Under the synergistic effect of the above structure and composition characteristics, the electrical performance of the iron-manganese-based positive electrode material is effectively improved, so that initial efficiency and cycling performance are well improved.

A particle size of the iron-manganese-based positive electrode material of the present application is less than that of an iron-manganese-based positive electrode material in the prior art, and is in a range from 140 nm to 1,000 nm, preferably 140 nm to 500 nm. Therefore, a specific surface area of the material is large, better dispersion may be achieved during homogenate coating in the production of batteries, so that the material may be in better contact with an electrolyte during charging and discharging, and the electrochemical performance of the material is improved.

A content of residual alkali (including lithium hydroxide and lithium carbonate) in the iron-manganese-based positive electrode material of the present application is low, and is in a range from 1,400 ppm to 1,900 ppm. The low content of residual alkali prevents the material from undergoing a cross-linking reaction with an electrode adhesive polyvinylidene fluoride (PVDF), which is easier to perform homogenate coating, meanwhile side reactions may be effectively reduced during charging and discharging, and the possibility of battery inflation is reduced.

It is not expected that there is the Li₂MnO₃ crystal phase in the iron-manganese-based positive electrode material of the present application, and preferably, a characteristic peak intensity of the Li₂MnO₃ crystal phase in the XRD spectrum of the iron-manganese-based positive electrode material in the range from 31° to 33° and/or the range from 43° to 45° is less than one third of the maximum characteristic peak intensity of the iron-manganese-based positive electrode material.

According to another typical implementation of the present application, a method for preparing an iron-manganese-based positive electrode material is provided, including: obtaining the iron-manganese-based positive electrode material by performing oxidation-sintering on a lithium inorganic compound and a FeₓMn_{y}(OH)₂ precursor, wherein 0<x<1.0, 0<y<1.0, and x+y=1; and a ratio of a molar weight of Li in the lithium inorganic compound to a total molar weight of Fe and Mn in the FeₓMn_{y}(OH)₂ precursor is in a range from 0.1:1 to 0.5:1.

The present application uses less lithium inorganic compound and the FeₓMn_{y}(OH)₂ precursor for oxidation-sintering, so as to form a lithium-deficient structure in the final prepared iron-manganese-based positive electrode material. The lithium-deficient structure ensures that the content of lithium in the material is low, and well controls the valence state and crystal form of manganese. On the one hand, some manganese in the material is positive tetravalent manganese, and on the other hand, in an XRD spectrum of the iron-manganese-based positive electrode material prepared by the embodiment of the present application, a maximum intensity of a characteristic peak (namely the characteristic peak in a range from 20° to 25°, a range from 31° to 33°, a range from 43° to 45° and a range from 53° to 55°) corresponding to the Li₂MnO₃ crystal phase is less than one third of the maximum characteristic peak intensity of the iron-manganese-based positive electrode material, or no characteristic peak of the Li₂MnO₃ crystal phase appears. Therefore, there is only very little or no Li₂MnO₃ phase in the positive electrode material of the present application, and thus there is no problem of oxygen release and increased cation concentration caused by a situation that the Li₂MnO₃ phase is prone to being decomposed during charging and discharging. Under the synergistic effect of the above structure and composition characteristics, the electrical performance of the iron-manganese-based positive electrode material is effectively improved, so that initial efficiency and cycling performance are well improved.

In some embodiments, the oxidation-sintering above is performed in an oxygen-containing gas, an oxygen content in the oxygen-containing gas is in a range from 20% to 100% preferably, and a flow rate of the oxygen-containing gas is in a range from 2L/min to 5L/min preferably. By controlling the oxygen content in the oxygen-containing gas and the flow rate of the oxygen-containing gas, the content of positive tetravalent Mn in the above iron-manganese-based positive electrode material may be further ensured, and the electrical performance of the positive electrode material of the present application is effectively improved.

In order to further improve the electrical performance of the positive electrode material, in some embodiments, the above preparation method includes: an iron-manganese-based positive electrode material precursor is obtained by performing a first-stage oxidation-sintering on the lithium inorganic compound and the FeₓMn_{y}(OH)₂ precursor; and the iron-manganese-based positive electrode material is obtained by performing a second-stage oxidation-sintering on the iron-manganese-based positive electrode material precursor; wherein preferably, the first-stage oxidation-sintering is performed at a temperature ranging from 600°C to 800°C, and kept at the temperature for a time ranging from 6h to 12h, and the second-stage oxidation-sintering is performed at a temperature ranging from 300°C to 500°C, and kept at the temperature for a time ranging from 2h to 6h. By dividing the oxidation-sintering into the first-stage oxidation-sintering with a high temperature and the second-stage oxidation-sintering with a low temperature, the first-stage oxidation-sintering may achieve oxidation of iron and manganese, by controlling the temperature and time of the second-stage oxidation-sintering, excessive high-valent manganese (pentavalent and hexavalent) caused by peroxidation of the iron and manganese is avoided, and thus the cycling performance and initial efficiency of the material are further improved. In addition, the second-stage oxidation-sintering is also conducive to further reaction of the material that has not fully reacted, and is conducive to purifying the material structure, removing impurity phases, obtaining the positive electrode material with better crystallinity, and further improving the electrical performance of the positive electrode material.

The high temperature raising rate before sintering and the high temperature decrease rate after sintering may cause more defects in the positive electrode material, as well as uneven distribution of elements in the material, the insufficient reaction between the precursor and lithium salt leads to a decrease of the electrical performance of the material, preferably, a temperature is raised at a rate ranging from 2°C/min to 5°C/min before the oxidation-sintering above, a temperature is decreased at a rate ranging from 2°C/min to 4°C/min between the first-stage oxidation-sintering and the second-stage oxidation-sintering, and a temperature is decreased at a rate ranging from 2°C/min to 4°C/min after the second-stage oxidation-sintering. By further limiting the above temperature raising rate and temperature decrease rate, all elements in the positive electrode material are distributed more evenly, the crystallization situation is better, grains are refined, internal stress of the material can be eliminated, a situation of particle breakage caused by intensification of the side reactions due to too small particles and large contact area with the electrolyte is offset to a certain extent, and thus better electrical performance is obtained.

In some embodiments, the above preparation method further includes a process for preparing the FeₓMn_{y}(OH)₂ precursor, and the process for preparing the FeₓMn_{y}(OH)₂ precursor includes: obtaining the FeₓMn_{y}(OH)₂ precursor by making a first material system including ferrous salt and divalent manganese salt undergo a co-precipitation reaction under an alkaline condition; wherein the ferrous salt is selected from one or more of ferrous chloride, ferrous nitrate, and ferrous oxalate preferably, the divalent manganese salt is selected from one or more of manganese chloride, manganese nitrate, and manganese acetate preferably, and preferably in the first material system, a molar ratio of Mn²⁺ to Fe²⁺ is in a range from 10:1 to 1:1; a pH value of the first material system is equal to 12 to 13 preferably, the pH value of the first material system is adjusted using an alkaline reagent preferably, and the alkaline reagent is selected from one or more of sodium hydroxide and sodium carbonate; and the co-precipitation reaction is performed at a temperature ranging from 40°C to 60°C preferably, the co-precipitation reaction is performed in an atmosphere of nitrogen or a second inert gas preferably, the second inert gas is selected from one of argon, helium and hydrogen, a stirring is performed during the process of the co-precipitation reaction preferably, and a rate for stirring is in a range from 200rpm to 400rpm preferably. By making the FeₓMn_{y}(OH)₂ precursor, a ratio of the iron to the manganese in the precursor and the physical performance of the precursor may be better controlled, so that the oxidation-sintering of the precursor of the present application and a lithium inorganic substance is performed more easily, and the particle size and iron and manganese content of the iron-manganese-based positive electrode material may be better controlled, so as to obtain the positive electrode material that is more in line with actual use demands.

In order to further improve the preparation efficiency and structural stability of the FeₓMn_{y}(OH)₂ precursor, preferably, the above first material system further includes a complexing agent and a solvent, and the process for preparing the FeₓMn_{y}(OH)₂ precursor includes: step S 1, the first material system is obtained by mixing the ferrous salt, the divalent manganese salt, the complexing agent and the solvent, wherein the complexing agent is selected from one or more of ammonium hydroxide, ammonium sulfate and ethylene diamine tetraacetic acid preferably, and preferably in the first material system, a content of the complexing agent is in a range from 28g/L to 53g/L; and step 2, the first material system is mixed with the alkaline reagent for a co-precipitation reaction after heating the first material system to the temperature of the co-precipitation reaction in the atmosphere of nitrogen or the second inert gas and under the conditions for stirring, and the FeₓMn_{y}(OH)₂ precursor is obtained after aging.

According to yet another aspect of the present application, a lithium ion battery is provided, including an electrolyte, a positive electrode material and a negative electrode material, wherein the positive electrode material includes an iron-manganese-based positive electrode material, and the iron-manganese-based positive electrode material is any above iron-manganese-based positive electrode material or an iron-manganese-based positive electrode material prepared by any above preparation method.

The lithium ion battery using the iron-manganese-based positive electrode material of the present application avoids the formation of a Li₂MnO₃ crystal phase, and has tetravalent manganese ions and low content of lithium, so that the cycling stability and initial efficiency are significantly improved compared to the prior art.

The present application is further described in details in conjunction with specific embodiments below, and these embodiments cannot be understood as limiting the scope of protection claimed in the present application.

### Example 1

1) 500g of ferrous chloride and 500g of manganese acetate are mixed with 2,000mL of water in a reaction kettle, 300g of ammonium hydroxide complexing agent is added into the reaction kettle, nitrogen is introduced into the reaction kettle at a rate of 3L/min, a dispersion solution in the reaction kettle is heated to 45°C, a sodium hydroxide solution is added into the reaction kettle to adjust pH of the dispersion solution to be equal to 12, the dispersion solution is stirred at 300rpm for a co-precipitation reaction, and a product obtained by the reaction is sedimented for 20h, then washed with water after being filtered by a funnel, and dried in an oven at 100°C to obtain a Fe_{0.5}Mn_{0.5}(OH)₂ precursor.
2) In a dry environment, 100g of Fe_{0.5}Mn_{0.5}(OH)₂ precursor and 18.8g of lithium hydroxide (n_{Li}:(n_{Fe}+n_{Mn})=0.4) are subjected to ball milling until even.
3) The evenly mixed material is placed in a Nabertherm box-type furnace, air is introduced into the box-type furnace at a flow rate of 4L/min, a temperature is raised to 700°C at a temperature raising rate of 2°C/min, then kept for 9h, and decreased to 100°C at a temperature decrease rate of 3°C/min to obtain an iron-manganese-based positive electrode material, namely Li_{0.4}Fe_{0.5}Mn_{0.5}O₂.

### Example 2

1) 500g of ferrous chloride and 500g of manganese acetate are mixed with 2,000mL of water in a reaction kettle, 300g of ammonium hydroxide complexing agent is added into the reaction kettle, nitrogen is introduced into the reaction kettle at a rate of 3L/min, a dispersion solution in the reaction kettle is heated to 45°C, a sodium hydroxide solution is added into the reaction kettle to adjust pH of the dispersion solution to be equal to 12, the dispersion solution is stirred at 300rpm for a co-precipitation reaction, and a product obtained by the reaction is sedimented for 20h, then washed with water after being filtered by a funnel, and dried in an oven at 100°C to obtain a Fe_{0.5}Mn_{0.5}(OH)₂ precursor.
2) In a dry environment, 100g of Fe_{0.5}Mn_{0.5}(OH)₂ precursor and 18.8g of lithium hydroxide (n_{Li}:(n_{Fe}+n_{Mn})=0.4) is subjected to ball milling until even.
3) The evenly mixed material is placed in a Nabertherm box-type furnace, air is introduced into the box-type furnace at a flow rate of 4L/min, a temperature is raised to 700°C at a temperature raising rate of 2°C/min, and then kept for 9h to obtain an intermediate product.
4) Under the above condition of air introduction, the temperature is decreased to 400°C at a temperature decrease rate of 2°C/min, and then kept for 4h, heating is stopped, and the temperature is decreased to 100°C at the temperature decrease rate of 3°C/min to obtain an iron-manganese-based positive electrode material, namely Li_{0.4}Fe_{0.5}Mn_{0.5}O₂.

### Example 3

The difference from Example 2 is that in step 3), a flow rate of air is 2L/min.

### Example 4

The difference from Example 2 is that in step 3), a flow rate of air is 1L/min.

### Example 5

The difference from Example 2 is that in step 3), a flow rate of air is 7L/min.

### Example 6

The difference from Example 2 is that in step 3), pure oxygen is used to replace air with a flow rate of 4L/min.

### Example 7

The difference from Example 2 is that in step 3), a temperature of oxidation-sintering is 600°C.

### Example 8

The difference from Example 2 is that in step 3), a temperature of oxidation-sintering is 800°C.

### Example 9

The difference from Example 2 is that in step 3), a temperature of oxidation-sintering is 500°C.

### Example 10

The difference from Example 2 is that in step 3), a temperature of oxidation-sintering is 900°C.

### Example 11

The difference from Example 2 is that in step 3), a time of oxidation-sintering is 6h.

### Example 12

The difference from Example 2 is that in step 3), a time of oxidation-sintering is 12h.

### Example 13

The difference from Example 2 is that in step 3), a time of oxidation-sintering is 4h.

### Example 14

The difference from Example 2 is that in step 3), a time of oxidation-sintering is 14h.

### Example 15

The difference from Example 2 is that in step 4), a temperature of oxidation-sintering is 300°C.

### Example 16

The difference from Example 2 is that in step 4), a temperature of oxidation-sintering is 500°C.

### Example 17

The difference from Example 2 is that in step 4), a temperature of oxidation-sintering is 200°C.

### Example 18

The difference from Example 2 is that in step 4), a temperature of oxidation-sintering is 600°C.

### Example 19

The difference from Example 2 is that in step 4), a time of oxidation-sintering is 2h.

### Example 20

The difference from Example 2 is that in step 4), a time of oxidation-sintering is 6h.

### Example 21

The difference from Example 2 is that in step 4), a time of oxidation-sintering is 1h.

### Example 22

The difference from Example 2 is that in step 4), a time of oxidation-sintering is 8h.

### Example 23

The difference from Example 2 is that in step 4), under the above condition of air introduction, a temperature is decreased to 400°C at a temperature decrease rate of 2°C/min, and then kept for 4h, heating is stopped, and the temperature is decreased to 100°C at the temperature decrease rate of 3°C/min to obtain an iron-manganese-based positive electrode material, namely Li_{0.4}Fe_{0.5}Mn_{0.5}O₂.

### Example 24

The difference from Example 2 is that in step 4), under the above condition of air introduction, a temperature is decreased to 400°C at a temperature decrease rate of 4°C/min, and then kept for 4h, heating is stopped, and the temperature is decreased to 100°C at the temperature decrease rate of 3°C/min to obtain an iron-manganese-based positive electrode material, namely Li_{0.4}Fe_{0.5}Mn_{0.5}O₂.

### Example 25

The difference from Example 2 is that in step 4), under the above condition of air introduction, a temperature is decreased to 400°C at a temperature decrease rate of 5°C/min, and then kept for 4h, heating is stopped, and the temperature is decreased to 100°C at the temperature decrease rate of 3°C/min to obtain an iron-manganese-based positive electrode material, namely Li_{0.4}Fe_{0.5}Mn_{0.5}O₂.

### Example 26

The difference from Example 2 is that in step 4), under the above condition of air introduction, a temperature is decreased to 400°C at a temperature decrease rate of 3°C/min, and then kept for 4h, heating is stopped, and the temperature is decreased to 100°C at the temperature decrease rate of 2°C/min to obtain an iron-manganese-based positive electrode material, namely Li_{0.4}Fe_{0.5}Mn_{0.5}O₂.

### Example 27

The difference from Example 2 is that in step 4), under the above condition of air introduction, a temperature is decreased to 400°C at a temperature decrease rate of 3°C/min, and then kept for 4h, heating is stopped, and the temperature is decreased to 100°C at the temperature decrease rate of 4°C/min to obtain an iron-manganese-based positive electrode material, namely Li_{0.4}Fe_{0.5}Mn_{0.5}O₂.

### Example 28

The difference from Example 2 is that in step 4), under the above condition of air introduction, a temperature is decreased to 400°C at a temperature decrease rate of 3°C/min, and then kept for 4h, heating is stopped, and the temperature is decreased to 100°C at the temperature decrease rate of 5°C/min to obtain an iron-manganese-based positive electrode material, namely Li_{0.4}Fe_{0.5}Mn_{0.5}O₂.

### Example 29

The difference from Example 1 is that 100 g of Fe_{0.5}Mn_{0.5}(OH)₂ precursor and 4.7 g of lithium hydroxide (n_{Li}:(n_{Fe}+n_{Mn})=0.1) are subjected to ball milling until uniformity is achieved, and an iron-manganese-based positive electrode material, namely Li_{0.1}Fe_{0.5}Mn_{0.5}O₂ is obtained after step 3).

### Example 30

The difference from Example 1 is that 100 g of Fe_{0.5}Mn_{0.5}(OH)₂ precursor and 23.5 g of lithium hydroxide (n_{Li}:(n_{Fe}+n_{Mn})=0.5) are subjected to ball milling until even, and an iron-manganese-based positive electrode material, namely Li_{0.1}Fe_{0.5}Mn_{0.5}O₂ is obtained after step 3).

### Example 31

1) 500g of ferrous chloride and 5,000g of manganese acetate are mixed with 2,000mL of water in a reaction kettle, 2.65g of ammonium hydroxide complexing agent is added into the reaction kettle, nitrogen is introduced into the reaction kettle at a rate of 3L/min, a dispersion solution in the reaction kettle is heated to 60°C, a sodium hydroxide solution is added into the reaction kettle to adjust pH of the dispersion solution to be equal to 13, the dispersion solution is stirred at 400rpm for a co-precipitation reaction, and a product obtained by the reaction is sedimented for 20h, then washed with water after being filtered by a funnel, and dried in an oven at 100°C to obtain a Fe_{0.1}Mn_{0.9}(OH)₂ precursor.
2) In a dry environment, 100g of Fe_{0.1}Mn_{0.9}(OH)₂ precursor and 18.8g of lithium hydroxide (n_{Li}:(n_{Fe}+n_{Mn})=0.4) are subjected to ball milling until even.
3) The evenly mixed material is placed in a Nabertherm box-type furnace, air is introduced into the box-type furnace at a flow rate of 4L/min, a temperature is raised to 700°C at a temperature raising rate of 5°C/min, then kept for 9h, and decreased to 100°C at a temperature decrease rate of 3°C/min to obtain an iron-manganese-based positive electrode material, namely Li_{0.4}Fe_{0.1}Mn_{0.9}O₂.

### Example 32

The difference from Example 1 is that, 1) 500g of ferrous chloride and 500g of manganese acetate are mixed with 2,000mL of water in a reaction kettle, 1.4g of ammonium hydroxide complexing agent is added into the reaction kettle, nitrogen is introduced into the reaction kettle at a rate of 3L/min, a dispersion solution in the reaction kettle is heated to 40°C, a sodium hydroxide solution is added into the reaction kettle to adjust pH of the dispersion solution to be equal to 12, the dispersion solution is stirred at 200rpm for a co-precipitation reaction, and a product obtained by the reaction is sedimented for 20h, then washed with water after being filtered by a funnel, and dried in an oven at 100°C to obtain a Fe_{0.5}Mn_{0.5}(OH)₂ precursor.

### Comparative Example 1

The difference from Example 1 is that in step 2), the addition amount of lithium hydroxide is 51.7g (n_{Li}:(n_{Fe}+n_{Mn})=1.1).

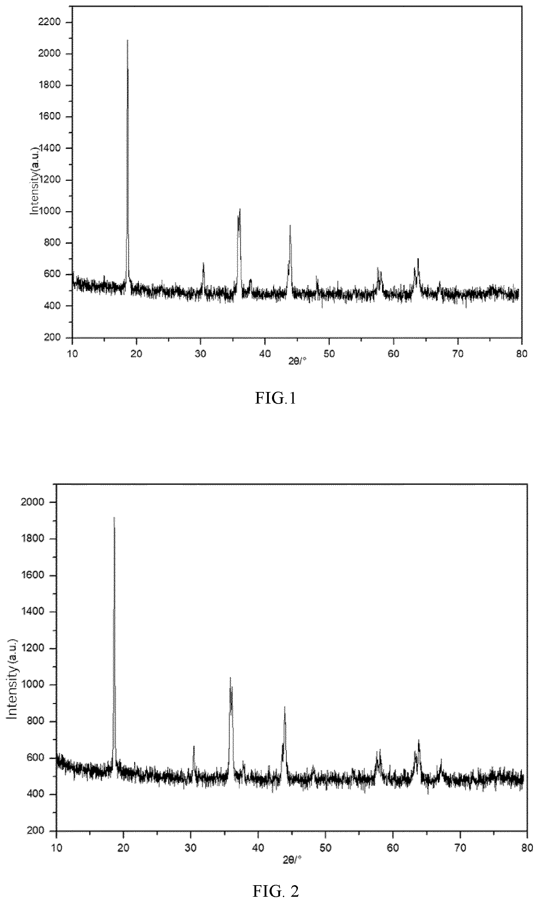

The iron-manganese-based positive electrode materials prepared in Examples 1 and 2 and Comparative Example 1 are subjected to an XRD test, and test results are as shown in FIGS. 1, 2 and 3. It may be seen from FIGS. 1 to 2 that no characteristic peak of the Li₂MnO₃ crystal phase appears in XRD spectra of the iron-manganese-based positive electrode materials prepared in Examples 1 and 2, indicating that the Li₂MnO₃ crystal phase is not included.

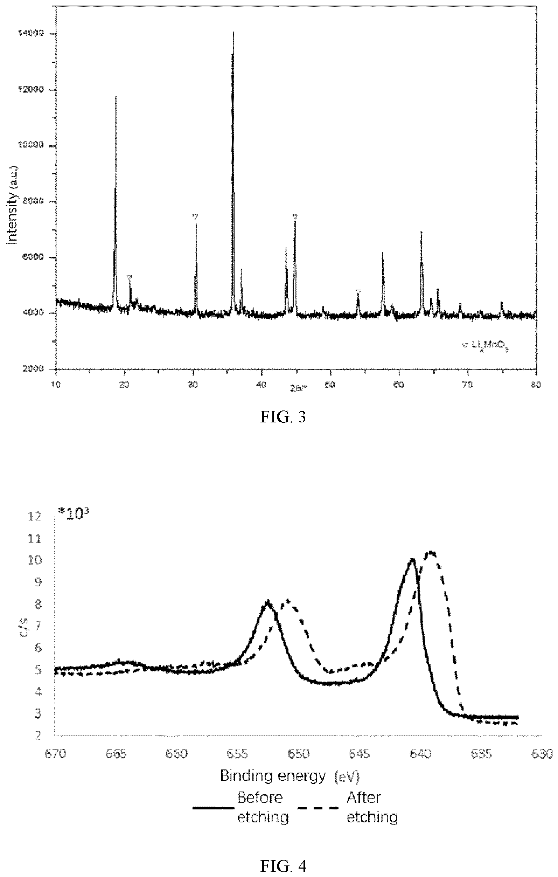

It may be seen from FIG. 3 that in the XRD spectrum, there are impurity peaks in a range from 20° to 25°, a range from 31° to 33°, a range from 43° to 45° and a range from 53° to 55° respectively, the range from 20° to 25° corresponds to a (020) crystal plane, and has a peak intensity value in a range from 800 to 1,000; the range from 31° to 33° corresponds to a (-113) crystal plane, and has a peak intensity in a range from 3,000 to 4,000; the range from 43° to 45° corresponds to a (-133) crystal plane of the material, and has a peak intensity in a range from 2,000 to 2,500; and the range from 53° to 55° corresponds to a (115) crystal plane of the material, and has a peak intensity in a range from 800 to 1,000.

The iron-manganese-based positive electrode material prepared in Example 1 is subjected to an XPS test, and results are as shown in FIG. 4. It may be seen from FIG. 4 that a Database spectrum is compared with a spectrum of the iron-manganese-based positive electrode material prepared in Example 1 before and after etching, it is speculated that an existing form of Mn is MnO₂ before etching and is MnO after etching, indicating that the iron-manganese-based positive electrode material prepared in Example 1 contains tetravalent manganese ions.

A content of residual alkali of the iron-manganese-based positive electrode materials prepared in all Examples and Comparative Example 1 is tested using a potentiometric titration method (GB/T 9725-2007), and results are as shown in Table 1.

### Preparation of a lithium ion battery

1. Homogenate coating is performed: a positive electrode material (an iron-manganese-based positive electrode material prepared in Examples or Comparative Example 1): a binder (polyvinylidene fluoride): a conductive agent (conductive carbon black)=92:4:4, and the materials are placed in a defoamer for mixing evenly, and then subjected to power deduction assembly.
2. Power deduction assembly is performed: power deduction assembly is performed in a sequence of a positive electrode shell (304 stainless steel), a spring piece (304 stainless steel), a gasket (304 stainless steel), a positive electrode (aluminum foil coated with the positive electrode material), a diaphragm (PE), an electrolyte (1mol/L LiPF₆, a solvent with a volume ratio of ethylene carbonate (EC) to diethyl carbonate (DEC) being 3:7), a negative electrode (a lithium sheet) and a negative electrode shell (304 stainless steel).

### Performance test

### Power deduction test

Under a condition of a constant temperature of 25°C, an assembled battery is subjected to standing for 12 hours, and an electrode material is fully infiltrated in an electrolyte. Then, it is tested on a LAND CT-2001A testing system.

Test results of Examples 1 and 2 and Comparative Example 1 are shown in FIG. 1, and the test results of all Examples and Comparative Example 1 are shown in Table 1.

**Table 1**

| | Average particle size/nm | Content of residual alkali/ppm | Initial efficiency (%) | Cycling stability (%) |
|---|---|---|---|---|
| Example 1 | 500 | 2100 | 154.3 | 92.1 |
| Example 2 | 300 | 1640 | 161.7 | 90.2 |
| Example 3 | 250 | 1850 | 143.5 | 87.5 |
| Example 4 | 180 | 2330 | 117.2 | 81.2 |
| Example 5 | 730 | 1720 | 161.6 | 82.3 |
| Example 6 | 700 | 1640 | 142.5 | 91.2 |
| Example 7 | 270 | 2580 | 145.3 | 88.2 |
| Example 8 | 330 | 1570 | 155.2 | 87.9 |
| Example 9 | 250 | 3200 | 115.2 | 81.7 |
| Example 10 | 450 | 1530 | 118.8 | 82.6 |
| Example 11 | 230 | 3180 | 160.2 | 86.9 |
| Example 12 | 420 | 1620 | 131.2 | 88.5 |
| Example 13 | 210 | 2320 | 113.2 | 75.9 |
| Example 14 | 460 | 1590 | 108.9 | 82.1 |
| Example 15 | 270 | 1670 | 153.5 | 88.1 |
| Example 16 | 320 | 1600 | 155.2 | 87.3 |
| Example 17 | 270 | 1800 | 117.6 | 78.2 |
| Example 18 | 320 | 1620 | 153.5 | 81.2 |
| Example 19 | 290 | 1680 | 142.6 | 88.3 |
| Example 20 | 780 | 1650 | 138.5 | 91.5 |
| Example 21 | 500 | 1680 | 123.6 | 82.3 |
| Example 22 | 870 | 1660 | 121.7 | 80.2 |
| Example 23 | 340 | 1680 | 144.6 | 87.9 |
| Example 24 | 280 | 1650 | 147.8 | 87.6 |
| Example 25 | 280 | 1630 | 117.8 | 81.5 |
| Example 26 | 300 | 1700 | 143.1 | 89.5 |
| Example 27 | 300 | 1610 | 143.7 | 89.1 |
| Example 28 | 310 | 1660 | 112.4 | 82.7 |
| Example 29 | 470 | 1730 | 105.6 | 72.1 |
| Example 30 | 520 | 1760 | 152.2 | 91.1 |
| Example 31 | 500 | 2200 | 153.3 | 90 |
| Example 32 | 510 | 2120 | 151.3 | 89.5 |
| Comparative Example 1 | 850 | 4200 | 32.1 | 75.2 |

It can be seen from the above description that the above Examples of the present application have achieved the following technical effects.

The present application uses less lithium inorganic compound and the FeₓMn_{y}(OH)₂ precursor for oxidation-sintering, so as to form a lithium-deficient structure in the final prepared iron-manganese-based positive electrode material. The lithium-deficient structure ensures that the content of lithium in the material is low, and well controls the valence state and crystal form of the manganese. On the one hand, some manganese in the material is positive tetravalent manganese, and on the other hand, in the XRD spectrum of the iron-manganese-based positive electrode material prepared by the examples of the present application, the maximum intensity of the characteristic peak (namely the characteristic peak in the range from 20° to 25°, the range from 31° to 33°, the range from 43° to 45° and the range from 53° to 55°) corresponding to the Li₂MnO₃ crystal phase is less than one third of the maximum characteristic peak intensity of the iron-manganese-based positive electrode material, or no characteristic peak of the Li₂MnO₃ crystal phase appears. Therefore, there is only very little or no Li₂MnO₃ phase in the positive electrode material of the present application, and thus there is no problem of oxygen release and increased cation concentration caused by a situation that the Li₂MnO₃ phase is prone to being decomposed during charging and discharging. Under the synergistic effect of the above structure and composition characteristics, the electrical performance of the iron-manganese-based positive electrode material is effectively improved, so that initial efficiency and cycling performance are well improved.

The above is only preferred embodiments of the present application, and is not intended to limit the present application. For those skilled in the art, there may be various modifications and variations in the present application. Any modifications, equivalent replacements, improvements, etc. made within the spirit and principle of the present application shall be included within the scope of protection of the present application.

## Claims

1. An iron-manganese-based positive electrode material, wherein the iron-manganese-based positive electrode material is LiₐFeₓMn_{y}O₂, wherein a=0.1-0.5, 0<x<1.0, 0<y<1.0, and x+y=1; a valence state of at least some of manganese elements in the iron-manganese-based positive electrode material is positive tetravalence; and a maximum intensity of a characteristic peak of a Li₂MnO₃ crystal phase in an XRD spectrum of the iron-manganese-based positive electrode material is less than one third of a maximum characteristic peak intensity of the iron-manganese-based positive electrode material, or no characteristic peak of the Li₂MnO₃ crystal phase appears, and the Li₂MnO₃ crystal phase has the characteristic peak in a range from 20° to 25°, a range from 31° to 33°, a range from 43° to 45° and a range from 53° to 55°.

2. The iron-manganese-based positive electrode material of claim 1, wherein a particle size of the iron-manganese-based positive electrode material is in a range from 140 nm to 1000 nm, preferably 140 nm to 500 nm; and a content of residual alkali in the iron-manganese-based positive electrode material is in a range from 1,400 ppm to 1,900 ppm preferably.

3. The iron-manganese-based positive electrode material of claim 1, wherein a characteristic peak intensity of the Li₂MnO₃ crystal phase in the XRD spectrum of the iron-manganese-based positive electrode material in the range from 31° to 33° and/or 43° to 45° is less than one third of the maximum characteristic peak intensity of the iron-manganese-based positive electrode material.

4. A method for preparing an iron-manganese-based positive electrode material, comprising:
obtaining the iron-manganese-based positive electrode material by performing oxidation-sintering on a lithium inorganic compound and a FeₓMn_{y}(OH)₂ precursor, wherein 0<x<1.0, 0<y<1.0, and x+y=1; and a ratio of a molar weight of Li in the lithium inorganic compound to a total molar weight of Fe and Mn in the FeₓMn_{y}(OH)₂ precursor is in a range from 0.1: 1 to 0.5:1.

5. The method for preparing the iron-manganese-based positive electrode material of claim 4, wherein the oxidation-sintering is performed in an oxygen-containing gas, an oxygen content in the oxygen-containing gas is in a range from 20% to 100% preferably, and a flow rate of the oxygen-containing gas is in a range from 2L/min to 5L/min preferably.

6. The method for preparing the iron-manganese-based positive electrode material of claim 5, comprising:
obtaining an iron-manganese-based positive electrode material precursor by performing a first-stage oxidation-sintering on the lithium inorganic compound and the FeₓMn_{y}(OH)₂ precursor; and
obtaining the iron-manganese-based positive electrode material by performing a second-stage oxidation-sintering on the iron-manganese-based positive electrode material precursor; wherein
preferably, the first-stage oxidation-sintering is performed at a temperature ranging from 600°C to 800°C, and kept at the temperature for a time ranging from 6h to 12h; and the second-stage oxidation-sintering is performed as a temperature ranging from 300°C to 500°C, and kept at the temperature for a time ranging from 2h to 6h.

7. The method for preparing the iron-manganese-based positive electrode material of claim 6, wherein a temperature is raised at a rate ranging from 2°C/min to 5°C/min before the oxidation-sintering, a temperature is decreased at a rate ranging from 2°C/min to 4°C/min between the first-stage oxidation-sintering and the second-stage oxidation-sintering, and a temperature is decreased at a rate ranging from 2°C/min to 4°C/min after the second-stage oxidation-sintering.

8. The method for preparing the iron-manganese-based positive electrode material of claim 4, further comprising a process for preparing the FeₓMn_{y}(OH)₂ precursor, wherein the process for preparing the FeₓMn_{y}(OH)₂ precursor comprises:
obtaining the FeₓMn_{y}(OH)₂ precursor by making a first material system comprising ferrous salt and divalent manganese salt undergo a co-precipitation reaction under an alkaline condition; wherein
the ferrous salt is selected from one or more of ferrous chloride, ferrous nitrate, and ferrous oxalate preferably, the divalent manganese salt is selected from one or more of manganese chloride, manganese nitrate, and manganese acetate preferably, and preferably in the first material system, a molar ratio of Mn²⁺ to Fe²⁺ is in a range from 10:1 to 1:1;
a pH value of the first material system is equal to 12 to 13 preferably, the pH value of the first material system is adjusted using an alkaline reagent preferably, and the alkaline reagent is selected from one or more of sodium hydroxide and sodium carbonate; and
the co-precipitation reaction is performed at a temperature ranging from 40°C to 60°C preferably, the co-precipitation reaction is performed in an atmosphere of nitrogen or a second inert gas preferably, the second inert gas is selected from one of argon, helium and hydrogen, a stirring is performed during the process of the co-precipitation reaction preferably, and a rate for stirring is in a range from 200rpm to 400rpm preferably.

9. The method for preparing the iron-manganese-based positive electrode material of claim 8, wherein the first material system further comprises a complexing agent and a solvent, and the process for preparing the FeₓMn_{y}(OH)₂ precursor comprises:
step S1, obtaining the first material system by mixing the ferrous salt, the divalent manganese salt, the complexing agent and the solvent, wherein the complexing agent is selected from one or more of ammonium hydroxide, ammonium sulfate and ethylene diamine tetraacetic acid preferably, and preferably in the first material system, a content of the complexing agent is in a range from 28g/L to 53g/L; and
step 2, mixing the first material system with the alkaline reagent for co-precipitation reaction after heating the first material system to the temperature of the co-precipitation reaction in the atmosphere of nitrogen or the second inert gas and under the conditions for stirring, and obtaining the FeₓMn_{y}(OH)₂ precursor after aging.

10. A lithium ion battery, comprising an electrolyte, a positive electrode material and a negative electrode material, the positive electrode material comprising an iron-manganese-based positive electrode material, wherein the iron-manganese-based positive electrode material is the iron-manganese-based positive electrode material of any one of claims 1 to 3 or an iron-manganese-based positive electrode material prepared by the method of any one of claims 4 to 9.
